# EUROPÄISCHE PATENTSCHRIFT

(11) **EP 3 356 109 B1**
(45) Veröffentlichungstag und Bekanntmachung des Hinweises auf die Patenterteilung: **09.03.2022**
(21) Anmeldenummer: 17701483.4
(22) Anmeldetag: 25.01.2017
(51) Int. Cl.: B29C 44/12, B29C 33/00, B29L 31/30, B29K 75/00, B29K 63/00, B29K 33/04

(54) **RAHMEN FÜR EIN FAHRZEUG MIT ZUMINDEST EINEM STRUKTURTEIL AUS SCHAUMHARZ SOWIE HERSTELLUNGSVERFAHREN DAFÜR**
FRAME FOR A VEHICLE WITH AT LEAST ONE FOAM RESIN STRUCTURAL PART AND PRODUCTION METHOD THEREFOR
CHÂSSIS DE VÉHICULE AVEC AU MOINS UNE PIÈCE STRUCTURALE EN RÉSINE CELLULAIRE ET SON PROCÉDÉ DE FABRICATION

(30) Priorität: 25.01.2016 DE 102016101274
(43) Veröffentlichungstag der Anmeldung: 08.08.2018
(73) Patentinhaber: Christ, Alexander, 50769 Köln (DE); Härtwich, Erwin, 71573 Allmersbach im Tal (DE)
(72) Erfinder: CHRIST, Alexander, 50769 Köln (DE); HÄRTWICH, Erwin, 71573 Allmersbach im Tal (DE)
(74) Vertreter: Bals, Rüdiger
(86) Internationale Anmeldenummer: PCT/EP2017/051491
(87) Internationale Veröffentlichungsnummer: WO 2017/129589

(56) Entgegenhaltungen:
- EP-A1- 0 670 257
- EP-A2- 1 484 150
- DE-A1-102007 024 804
- DE-A1-102008 010 834
- DE-A1-102013 215 933
- DE-A1-102014 204 369
- US-A1- 2004 222 671
- US-A1- 2009 277 544

## Beschreibung

Die vorliegende Erfindung ist auf einen Rahmen von einem Fahrzeug mit zumindest einem Strukturteil gemäß dem Oberbegriff von Anspruch 1 gerichtet. Des Weiteren betrifft die Erfindung auch ein Verfahren zur Herstellung eines Rahmens für einen Fahrzeug mit zumindest einem Strukturteil gemäß Anspruch 10.

Aus dem Stand der Technik sind diverse Strukturteile, insbesondere für den Fahrzeugbau bekannt. So werden gerade im Wohnmobilbereich Füllelemente einer Rahmenstruktur als Wandelemente verwendet. Diese Füllelemente sind in der Regel plattenartig aufgebaut, d. h. sie verfügen mehr oder weniger über zwei parallele Außenebenen, zwischen denen eine Zwischenschicht angeordnet ist.

Derartige Füllelemente können mit verstärkten Sandwichbauteilen zum Einsatz kommen. Aus der Druckschrift DE 10 2013 114 770 A1 ist z. B. ein Herstellungsverfahren sowie das vergleichbare Füllelement bekannt. Derartige Füllelemente werden innerhalb eines Werkzeugs zusammengepresst, um eine Verbindung herzustellen. Ferner ist es im Fahrzeugbereich bekannt, die Rahmenteile aus metallischen Stangenprofilen und/oder Stangenprofilen aus Kunststoff herzustellen, um somit den tragenden Teil des Fahrzeugs bilden zu können. Derartige Stangenprofile werden meistens im Strangpressverfahren hergestellt, so dass die dadurch entstehenden Teile mehr oder weniger eine lineare Erstreckung aufweisen. Außerdem ist durch die lineare Erstreckung der Rahmenteile auch mehr oder weniger eine quadratische Grundform eines Fahrzeugs vorgegeben.

Ferner ist aus der Druckschrift DE 10 2013 215 933 A1 ein Strukturbauteil für ein Fahrzeug mit einer mechanischen Verstärkung bekannt. Diese Strukturbauteile weisen keine konkreten Oberflächen auf und sind im Sichtbereich somit ungeeignet. Auch geht aus der Druckschrift EP 0 670 257 A1 ein Fahrzeug mit vorgefertigten eigensteifen KarosserieElementen u. a. mit einem Schaumstoffkern hervor. Diese Karosserie-Elemente bilden jedoch keinen Rahmen des Fahrzeuges.

Somit ist es Aufgabe der vorliegenden Erfindung einen Rahmen für ein Fahrzeug mit einem Strukturteil und auch ein Verfahren zur Herstellung des Strukturteils bereitzustellen, wobei zumindest teilweise die Nachteile aus dem Stand der Technik überwunden werden. Insbesondere ist es eine Aufgabe der vorliegenden Erfindung, ein mechanisch festes Strukturteil für den Rahmen eines Fahrzeugs, sowie den Rahmen selber zu erhalten, der auch ohne eine zusätzliche Wärmeisolation auskommt. Ferner ist es erstrebenswert, dass auch eine Serienfertigung des Strukturteils sowie des Rahmens für ein Fahrzeug mit dem Strukturteil erreichbar ist. Dabei soll ein materialschonender Einsatz erreicht werden, so dass wenig überflüssiges Material bei der Herstellung verschwendet wird.

Die vorliegende Aufgabe wird durch einen Rahmen von einem Fahrzeug mit zumindest einem Strukturteil mit den Merkmalen des Anspruchs 1, insbesondere aus dem kennzeichnenden Teil, gelöst. Darüber hinaus wird die Aufgabe auch durch das Verfahren zur Herstellung eines Rahmens für ein Fahrzeug mit zumindest einem Strukturteil mit den Merkmalen des Anspruchs 10 gelöst. Ebenfalls betrifft die

Offenbarung auch ein Fahrzeug, insbesondere ein Wohnmobil oder einen Wohnwagen, mit den erfindungsgemäßen Merkmalen des Rahmens mit zumindest einem Strukturteil für das Fahrzeug. Das Strukturteil kann auch im Sinne der Erfindung als Fahrzeugrahmenstrukturteil bezeichnet werden. In den abhängigen Vorrichtungs- und Verfahrensansprüchen sind bevorzugte Weiterbildungen der Erfindung aufgeführt. Merkmale, die zu dem erfindungsgemäßen Rahmen für ein Fahrzeug mit zumindest einem Strukturteil offenbart werden, gelten dabei auch für das erfindungsgemäße Herstellungsverfahren und umgekehrt. In den abhängigen Vorrichtungs- und Verfahrensansprüchen sind bevorzugte Weiterbildungen der Erfindung aufgeführt. Außerdem gelten die offenbarten Vorrichtungsmerkmale auch für das erfindungsgemäße Verfahren und umgekehrt, so dass diesbezüglich wechselseitig Bezug genommen wird.

Erfindungsgemäß ist es bei dem Rahmen von einem Fahrzeug mit zumindest einem Strukturteil vorgesehen, dass das Strukturteil durch ein Schaumharz gebildet ist. Dabei kommt ein selbstaufquellendes Schaumharz zum Einsatz, welches vor dem Eingießen in eine entsprechende Gussform flüssig ist und mit einem entsprechenden Aktivator versehen ist. Nach dem Einschütten des selbstaufquellenden Schaumharzes in die Gussform quillt dieses um einen entsprechenden Volumenzusatz auf, und füllt somit den Innenraum der Gussform, der komplementär zur Außenform des Strukturteils ausgebildet ist, vollständig mit dem Schaumharz aus. Das Schaumharz selbst kann dabei aus verschiedenen Kunststoffmaterialien ausgebildet sein. Hierbei ist es denkbar, dass es sich um so genannte Epoxidharze, Hybridschaumsysteme, expandierende Polyesterharze, insbesondere vorbeschleunigte und thixotropiertes, ungesättigte Polyesterharze und/oder sogenannte aufschäumbare, technische Polyurethane (PU) handelt. Dabei kann es sich um ein Zweioder Dreikomponentensystem für den Schaumharz handeln, der fertig angemischt und flüssig in die Gussform eingefüllt wird. Um einen Überdruck in der Gussform zu verhindern, können entsprechende Ausweichkavitäten in der Gussform vorgesehen sein, die das überflüssige Material des Schaumharzes aufnehmen können, um so einen Überdruck abzubauen. Üblicherweise härten derartige expandierende Schaumharze unter Umgebungstemperatur, gemeint ist Raumtemperaturen zwischen 15 und 25 °C, aus. Das flüssige Schaumharz kann unter Umgebungsdruck in die Gussform eingefüllt werden, die ebenfalls nur mit dem Umgebungsdruck ausgefüllt ist. Dabei ist es nicht erforderlich, dass ein zusätzliches Vakuum in der Gussform erzeugt werden muss.

Um die richtige Menge des zu verwendenden Schaumharzes bestimmen zu können, empfiehlt es sich, zunächst das Volumen der Außenform des Strukturteils zu bestimmen, um somit eine entsprechend bestimmbare Menge anhand des Quellfaktors des Schaumharzes, ausrechnen zu können. Diese Menge wird für den einzelnen Fertigungsschritt entsprechend vorbereitet, indem die einzelnen Komponenten des Schaumharzes miteinander vermischt werden. Bevor jedoch das Schaumharz in die Gussform eingefüllt wird, werden die Kontaktflächen, die zwischen der Gussform und dem Schaumharz vorhanden sind, zumindest teilweise mit einer Schutzschicht ausgelegt, mit der später das Strukturteil versehen ist. Hierbei kann es sich um eine Schutzschicht aus einem so genannten GelCoat-Material und/oder Polyurea-Material handeln. Das aufquellende Schaumharz verbindet sich dann entsprechend mit der Schutzschicht, so dass ein mehr oder weniger fertiges Strukturteil entsteht, an dem keine Oberflächenbearbeitung mehr vorgenommen werden braucht. Zusätzlich können in die Gussform auch Einsatzelemente eingebracht werden, die als Verstärkungselemente oder Verbindungselemente für das Strukturteil dienen können. Idealerweise sind die Einsatzelemente formschlüssig mit dem Schaumharz verbunden, um somit einen optimalen in oder am Strukturteil zu erzielen. Die Verstärkungselemente dienen dazu, insbesondere die mechanische Festigkeit des Strukturteils zu verbessern. Hierbei können die Verstärkungselemente aus Glasfaser, Carbonfasern, Verstärkungsmatten, Sandwichstrukturen, Innenkern, metallisches Verstärkungselementen oder eine Kombination davon gebildet sein. Außerdem können zusätzliche Verbesserungsmittel dem Schaumharz beigefügt werden, wie z. B. Brandschutzmittel, um die Feuerfestigkeit des Strukturmittels zu verbessern.

Die bereits erwähnten Verbindungselemente können idealerweise an der Gussform derart positioniert werden, dass eine konkrete Anordnung im Strukturteil erzielbar ist. Derartige Verbindungselemente können zumindest ein Haltemittel aufweisen, insbesondere in Form eines Schraubmittels, Rastmittels, einer Klebe- und/oder Schweißfläche oder dergleichen. Über dieses Verbindungselement lässt sich das Strukturteil nach der Herstellung mit weiteren Strukturteilen oder weiteren Verbindungsteilen zu einem Rahmen des Fahrzeugs zusammenfügen. Idealerweise verfügen die Verbindungselemente über wenigstens ein Verankerungsmittel, insbesondere in Form eines Pilzkopfes oder in Form eines T-förmigen Abschnitts, um somit eine formschlüssige Verbindung zum Schaumharz bilden zu können. Die Verbindungselemente selbst können auch aus z. B. Führungsschienen gebildet sein, in die weitere Verbindungsmittel, wie z. B. Schrauben oder Nieten oder dergleichen anordbar sind. Zweckmäßigerweise können die Verbindungsmittel metallische Werkstoffe, wie z. B. Eisen- und Nichteisenwerkstoffe, Leichtmetalle und dergleichen, aufweisen, wodurch die mechanische Verbindung zwischen zwei Strukturteilen deutlich vereinfacht und ggf. auch verbessert werden kann.

Nachdem sämtliche Einsatzelemente, in Form von Verstärkungselementen und Verbindungselementen in der Gussform, die insbesondere zweiteilig ausgebildet sein kann, angeordnet sind, wird das fließfähige Schaumharz in die Gussform eingefüllt. In der Gussform selber schäumt dann dieses Schaumharz selbstständig auf durch den entsprechenden Aktivator und füllt die Gussform somit im Bereich des Strukturteils vollständig aus. Überflüssiges Material kann dabei in die bereits erwähnten Ausweichkavitäten entweichen. Anschließend empfiehlt es sich den Schaumharz entsprechend aushärten zu lassen, damit das Strukturteil über seine ausreichende mechanische Stabilität verfügt. Nach dem Aushärten kann die zumindest zweiteilige Gussform geöffnet werden und das Strukturteil herausgenommen werden.

Da die Gussform problemlos durch die Einlage der Schutzschicht wiederverwendbar ist, können somit baugleiche Strukturteile auch in klein- und mittelgroßen Serien auf einfache Art und Weise hergestellt werden. Zur statischen Unterstützung der Gussform empfiehlt sich die Verwendung einer Stützkonstruktion, die insbesondere aus Holz, Leichtbauwerkstoffen und/oder Verbundwerkstoffen, auf einfache Art und Weise mit geringem Gewicht sowie umweltfreundlich herstellbar ist.

Da das erfindungsgemäße Herstellungsverfahren auch Hinterschnitte an dem Strukturteil ermöglicht, können auch komplexe dreidimensionale Gebilde von Strukturteilen hergestellt werden. Diese müssen nur durch die entsprechende Gussform selber abgebildet werden. Zu diesem Zweck kann die Gussform auch mehr als zweiteilig ausgestaltet sein.

Wie bereits erwähnt, können zumindest zwei vorhandene Strukturteile zu einem erfindungsgemäßen Rahmen für ein Kraftfahrzeug zusammengesetzt werden, wozu sie einerseits direkt und andererseits indirekt miteinander verbindbar sind. Sofern die Strukturteile direkt miteinander verbunden werden, ist es empfehlenswert, die entsprechenden Verbindungselemente am Strukturteil zu verwenden. Ansonsten können zusätzliche Verbindungsteile zum Einsatz kommen, die ebenfalls als Strukturteile ausgebildet sein können. Die Verbindung der einzelnen Strukturteile können durch Kleben, Stecken, Schrauben, Stiften, Dübeln, Nieten oder Schweißen zusammengefügt werden. Beim Kleben kann z. B. ein hochfester Mehrkomponentenkleber auf Epoxidbasis oder ein dauerelastischer Karosseriekleber (z B. von SICA) zum Einsatz kommen. Da bei dem Herstellungsverfahren bereits eine Schutzschicht des Strukturteils in die Gussform eingearbeitet wird, erhalten die Strukturteile eine anspruchsvolle und ansehnliche Oberfläche, die auch direkt als Sichtfläche im Fahrzeugaußenbereich einsetzbar ist. Hierbei ist es denkbar, dass die Schutzschicht entsprechend nachbearbeitbar, z. B. lackierbar oder bedruckbar, ist, um dem gesamten Fahrzeug einen wohlgefälligen Eindruck zu vermitteln. Insgesamt kann somit ein sehr stabiles aber leichtes Fahrzeug erreicht werden, wobei auch der Rahmen zur Wärmedämmung des Innenraumes des Fahrzeuges beiträgt.

Idealerweise verfügt das Schaumharz über eine Wärmeleitfähigkeit zwischen 0,1 und 0,015 W/(m*K), bevorzugt zwischen 0,08 und 0,02 W/(m*K), besonders bevorzugt zwischen 0,05 und 0,021 W/(m*K). Damit erübrigt sich eine zusätzliche Wärmeisolierung des Rahmens vom Fahrzeug, insbesondere wenn dieses als Wohnmobil oder Wohnwagen ausgestaltet ist. Um trotzdem ein besonders leichtes und energiesparendes Fahrzeug zu erzeugen, empfiehlt es sich, dass das Schaumharz eine Dichte zwischen 100 bis 300 kg/cbm, bevorzugt zwischen 130 bis 200 kg/cbm und besonders bevorzugt zwischen 140 bis 180 kg/cbm aufweist. Um gerade die Verwendung des Strukturteils im Fahrzeugbau zu ermöglichen, ist es von Vorteil, wenn dieses eine Zugfestigkeit zwischen 15 und 25.000 N/mm², bevorzugt zwischen 30 und 10.000 N/mm², besonders bevorzugt zwischen 45 und 2.000 N/mm² sowie zwischen 100 und 1.600 N/mm² aufweist. Somit sind Zugfestigkeiten für das erfindungsgemäße Strukturteil im Bereich von Metallen erreichbar. Damit vereinen sich bei dem erfindungsgemäßen Strukturteil die Vorzüge der Metalleigenschaften mit den Vorzügen der Kunststoffschaumbauteile. Außerdem kann eine besonders hohe Dichtigkeit (für Wasser und Wind) bei dem Rahmen des Fahrzeugs durch die Verwendung der erfindungsgemäßen Strukturteile erreicht werden.

Ferner ist die Offenbarung explizit auch auf ein Fahrzeug, insbesondere ein Kraftfahrzeug (z. B. mit Alkoven), ein LKW, ein Kofferfahrzeug (mit Ladeaufbau), ein Wohnmobil oder ein Wohnwagen oder dergleichen mit einem erfindungsgemäßen Rahmen gerichtet, der zumindest zwei Strukturteile aufweist. Die im Rahmen des Fahrzeugs vorhandenen freien Flächen können über zusätzliche Füllelemente, die als Wandelemente oder Dachelemente ausgestaltet sein können, ausgefüllt werden. In diesen Füllelementen können dann Aussparungen für Türen, Fenster, Lüftungsschlitze und dergleichen angeordnet werden. Die Füllelemente selbst können als Schaumharzkunststoffteile ausgestaltet sein, die in der Regel plattenförmig vorgesehen sind.

Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Figur 1: eine dreidimensionale Ansicht eines Strukturteils mit angedeuteten Einsatzelementen,
- Figur 2: eine Gussform für ein Strukturteil mit einer Stützkonstruktion,
- Figur 3: eine dreidimensionale Ansicht von zwei über die Verbindungselemente miteinander verbundenen Strukturteilen,
- Figur 4: eine dreidimensionale Ansicht eines Rahmens für einen Wohnwagen mit den Strukturteilen,
- Figur 5: eine dreidimensionale Ansicht vergleichbar zu Figur 4 mit zusätzlichen Füllelementen für den Rahmen,
- Figur 6: eine dreidimensionale Ansicht vergleichbar zu den Figuren 4 und 5 mit eingesetzten Füllelementen in dem Rahmen des Fahrzeugs und
- Figur 7: eine dreidimensionale Ansicht vergleichbar zu den Figuren 4 bis 6 eines fertig hergestellten Fahrzeugs, in Form eines Wohnwagens.

In den Figuren werden für die gleichen technischen Merkmale auch für unterschiedliche Ausführungsbeispiele die identischen Bezugszeichen verwendet.

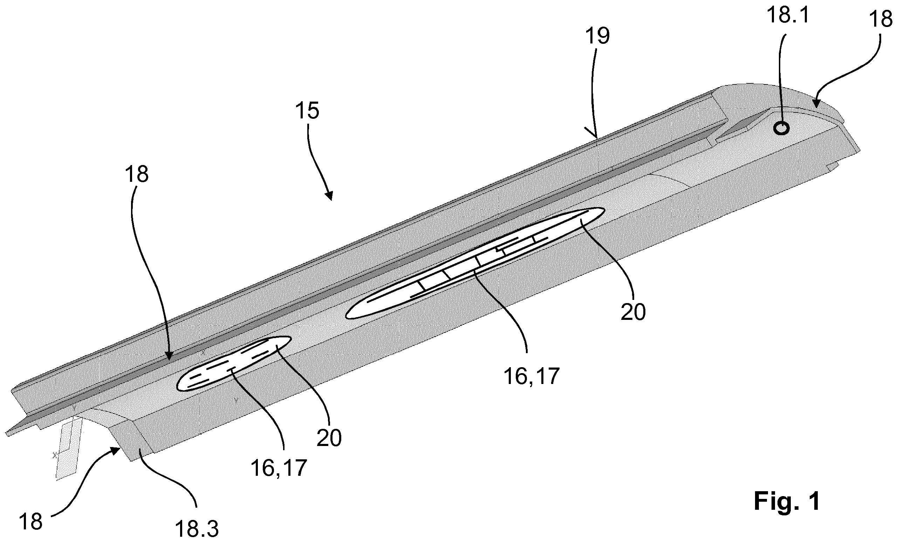

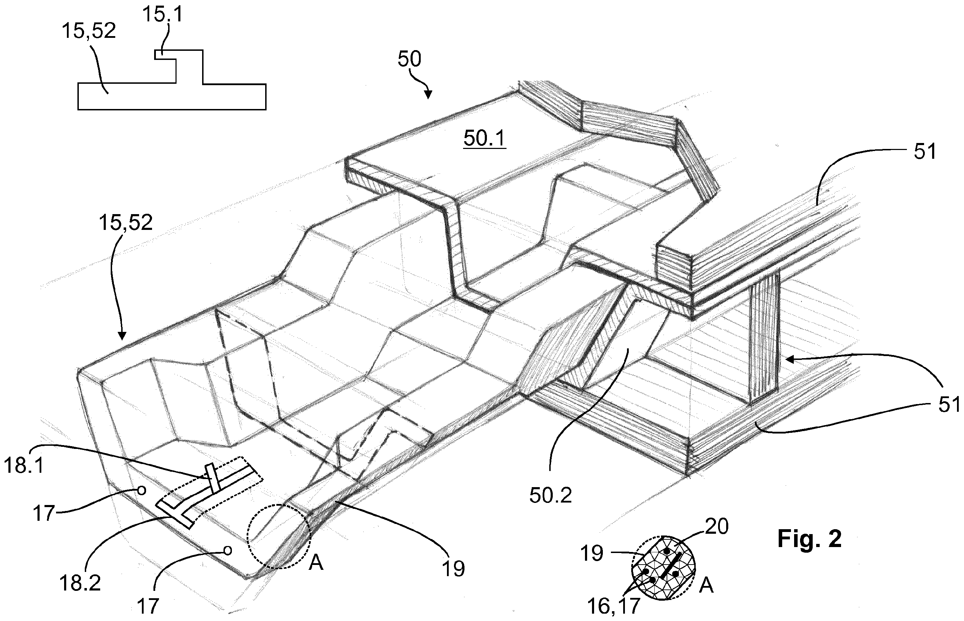

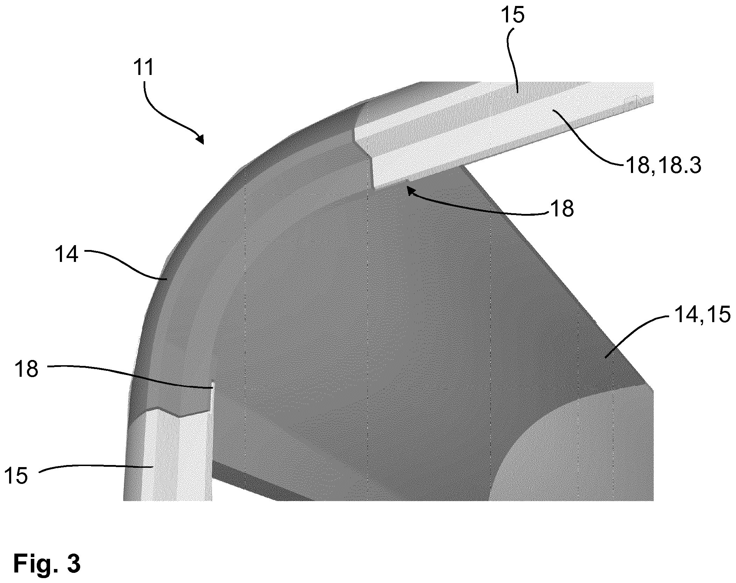

In Figur 1 ist ein Strukturteil 15 aus Schaumharz 20 für den Rahmen eines Fahrzeuges 10 gezeigt. Dieses weist im vorliegenden Fall eine im wesentlichen lineare Erstreckung auf. Zur mechanischen Verstärkung sind im Strukturteil 15, insbesondere im Schaumharz 20 Einsatzelemente 16 in Form von Verstärkungselemente 17 vorgesehen. Die Verstärkungselemente 17 können im vorliegenden Fall aus Glasfasern und/oder Carbonfasern bestehen. Ferner können auch aus diesen Fasern entsprechende Matten oder Gewebe bei dem Strukturteil 15 im Schaumharz 20 eingebettet sein. Zur Verdeutlichung der Verstärkungselemente 17 sind in der Figur 1 entsprechende Freischnitte angedeutet, in denen die Fasern sichtbar sind. Da das Strukturteil 15 einen tragenden Teil eines Rahmens 11 für ein Fahrzeug 10 bildet, was aus den weiteren Figuren noch sichtbar wird, ist es an seiner Außenseite mit einer Schutzschicht 19, in Form eines GelCoats, versehen. Gleichzeitig kann diese Schutzschicht 19 als Außenseite des Fahrzeugs 10 dienen. Um das Strukturteil 15 mit weiteren Strukturteilen 15 verbinden zu können, weist es endseitig bzw. randseitig mehrere Verbindungselemente 18 auf. Dabei kann ein Verbindungselemente 18 zumindest ein Haltemittel 18.1 und/oder ein Verankerungsmittel 18.2 aufweisen. Das Haltemittel 18.1 dient wenigstens zur Verbindung mit einem weiteren Strukturteil 15, um den tragenden Rahmen 11 für das Fahrzeug 10 zu bilden. Zusätzlich kann auch ein Verbindungsteil 14 (s. auch Fig. 3) zur indirekten Verbindung zweier Strukturteile 15 vorgesehen sein. Am rechten Ende (aus Fig. 1) ist das Haltemittel 18.1 beispielhaft in Form einer Gewindebohrung ausgestaltet. Zusätzlich weist das Verbindungselemente 18 großflächige Klebeflächen nach dem Nut- und Federsystem auf (s. auch Fig. 3). Die Figur 2 zeigt in einer Schnittansicht ein Strukturteil 15 aus Schaumharz 20 in einer Gussform 50, die im Wesentlichen zweiteilig, gemeint ist aus einer unteren 50.1 und einer oberen Hälfte 50.2, aufgebaut ist. In diese Gussform 50 ist vor dem Eingießen bzw. Einfüllen (Schritt b)) des flüssigen Schaumharzes 20 eine Schutzschicht innenseitig an der Gussform 50 angelegt worden, die die spätere Schutzschicht 19 des erfindungsgemäßen Strukturteils 15 bildet. Da beim Aufschäumen und Aushärten des Schaumharzes 20 kein nennenswerter Druck entsteht, kann die Gussform 50 selbst aus Kunststoff (aufgeschäumten Kunststoff, Polyesterharz- und/oder Epoxydharz -Laminat) und/oder Holz und/oder Metall sowie Mischmaterialien bzw. Verbundstoffen bestehen. Zur Verstärkung dieser Gussform 50 kann eine zusätzliche Stützkonstruktion z. B. aus Holz Verwendung finden. Wie an des dreidimensionalen Strukturteils 15 gut zu erkennen ist, bildet dieses eine komplizierte Außenform, wobei insbesondere ein U-förmiger Querschnitt vorhanden ist.

In Figur 2 ist beispielhaft oben links eine Seitenansicht eines Strukturteils 15 mit einem Hinterschnitt 15.1 dargestellt, welches ebenfalls problemlos durch das erfindungsgemäße Verfahren herstellbar ist. Unten rechts ist eine Querschnittsvergrößerung vom Ausschnitt A des Strukturteils 15 gezeigt. Hierbei ist außen die Schutzschicht 19 sichtbar, die den Schaumharz 20 verdeckt. Im Schaumharz 20 sind Einsatzelemente 16 in Form von Verstärkungselementen 17, insbesondere Fasern gezeigt. Am linken Ende des dargestellten Strukturteils 15 ist beispielhaft ein Verbindungselement 18 in Form einer Linearführung für eine Schraube oder einen Befestigungsbolzen als Haltemittel 18.1 vorhanden. Damit das Verbindungselement 18 einen festen Halt im Strukturteil 15 aufweist, ist das U-förmige Verankerungsmittel 18.2 vorhanden. Hierdurch ist das Verbindungselement 18 formschlüssig sowie stoffschlüssig am bzw. im Strukturteil 15 befestigt. Die Schraube oder der Befestigungsbolzen ist längsverschieblich in der Linearführung des Verbindungselements 18 gelagert, wodurch das Verbindungselement 18 besonders einfach mit einem weiteren Strukturteil 15 oder Verbindungsteil 14 verbindbar ist.

In der weiteren Figur 3 ist die Verbindung zwischen zwei bzw. drei Strukturteilen 15 zu einem Rahmen 11 gezeigt. Dabei ist das senkrechte Strukturteil 15 über ein Nut- und Federsystem als Verbindungselement 18 mit dem Eckstrukturteil 15 bzw. dem Verbindungsteil 14 verbunden. Idealerweise wird das Nut- und Federsystem stoffschlüssig durch Kleben oder Schweißen miteinander verbunden. Hierdurch können auch beidseitig glatte Oberflächen auch im Bereich der Verbindungselement 18 entstehen, die hervorragend eine weitere Verarbeitung des Rahmens 11 zulassen. Außerdem ist eine derartige Verbindung besonders dicht u. a. gegen äußere Einflüsse wie Wind und Wasser. Zusätzlich ist eine Verschraubung oder Vernietung im Bereich der Verbindung denkbar. Wie ferner an Figur 3 auch zu erkennen ist, bilden die vorhanden Strukturteile 15 eine einseitig offene Nut 18.3 (s. Bezugszeichen 18 oben links), in der ein flächiges Füllelement 12 anordbar ist, nachdem der Fahrzeugrahmen 11 vorgefertigt ist. Der beschriebene Absatz (offene Nut) ist durch ein langgezogenes Verbindungselement 18 gebildet, um eine randseitige Aufnahme 18.3 für das Füllelement 12 zu bilden.

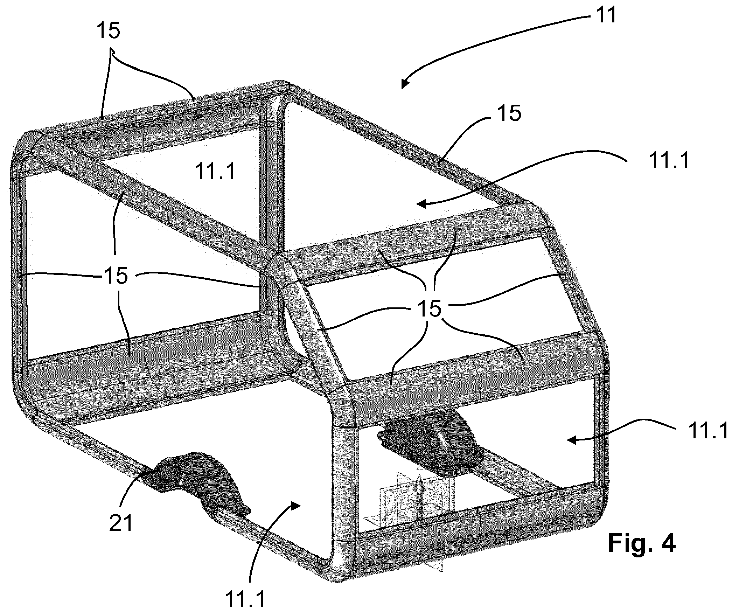

Ein kompletter Fahrzeugrahmen 11 für einen Wohnwagen 10 ist in der Figur 4 dargestellt. Dabei sind die offenen Freiräume 11.1 zwischen den miteinander befestigten Strukturteilen 15 noch nicht mit den flächigen Füllelementen 12 versehen bzw. ausgefüllt.

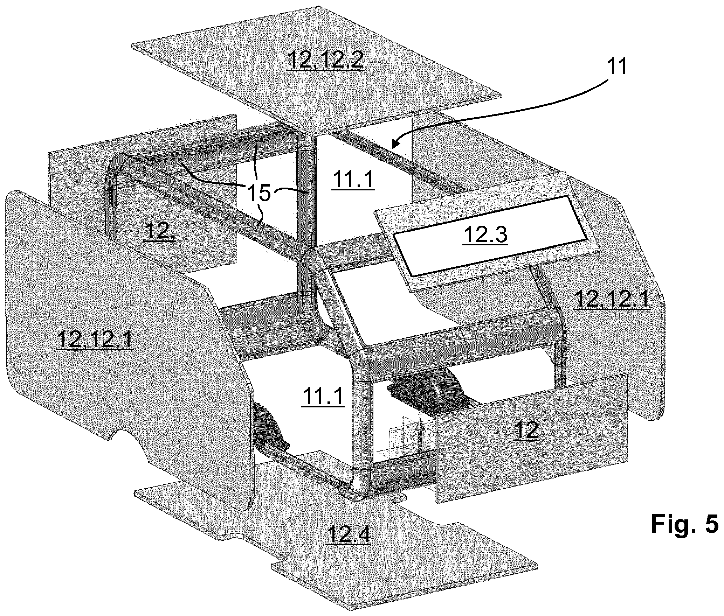

In der weiteren Figur 5 ist die Anordnung der einzelnen flächigen Füllelementen 12 in den vorgesehenen Freiräumen 11.1 dargestellt. Dabei können die flächigen Füllelementen 12 über die vorhandenen Verbindungselemente 18 mit dem Rahmen 11 bzw. den Strukturteilen 15 verbunden werden. Diese kann z.B. durch eine stoff- und/oder formschlüssige Verbindung erfolgen. Idealerweise werden die flächigen Füllelementen 12 zumindest in den Rahmen 11 im Bereich der Klebeflächen 18.3 eingeklebt, um eine besonders dichte Verbindung zu erzielen. Zusätzlich ist auch hier eine Verschraubung oder Vernietung im Bereich der Verbindung zwischen Rahmen 11 und den Füllelementen 14 denkbar. Ferner ist es denkbar, dass in den Füllelementen 12 Aussparungen 12.3 für Fenster 13 oder Türen 13 eingearbeitet werden. Die Füllelementen 12 können dabei als Wandelemente 12.1, Dachelemente 12.2 oder Bodenelemente 12.4 ausgestaltet sein.

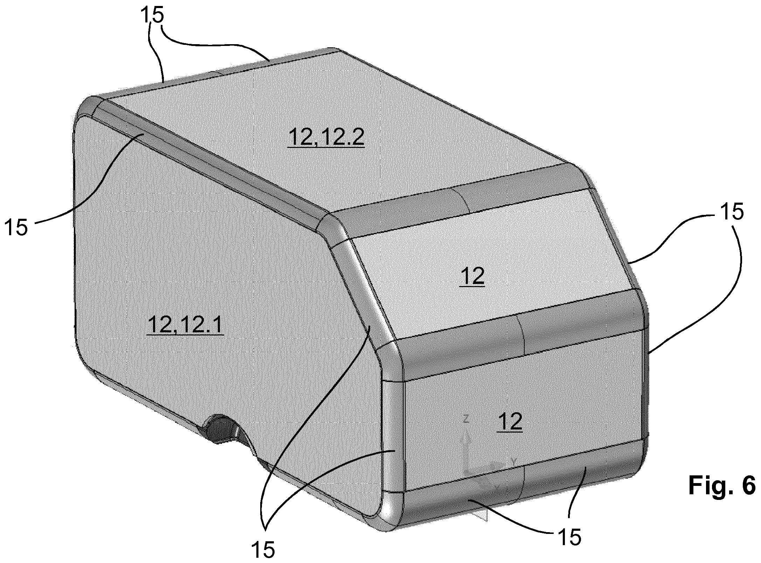

In der weiteren Figuren 6 sind die befestigten Füllelemente 14 im Fahrzeugrahmen 11 sichtbar. Der Rahmen 11 mit den befestigten Füllelemente 14 kann innen- und außenseitig noch beschichtet, lackiert und/oder bedruckt werden, um einen zusätzlichen Schutz gegen Umwelteinflüsse zu erreichen und einen wohlgefälligen Eindruck zu vermitteln.

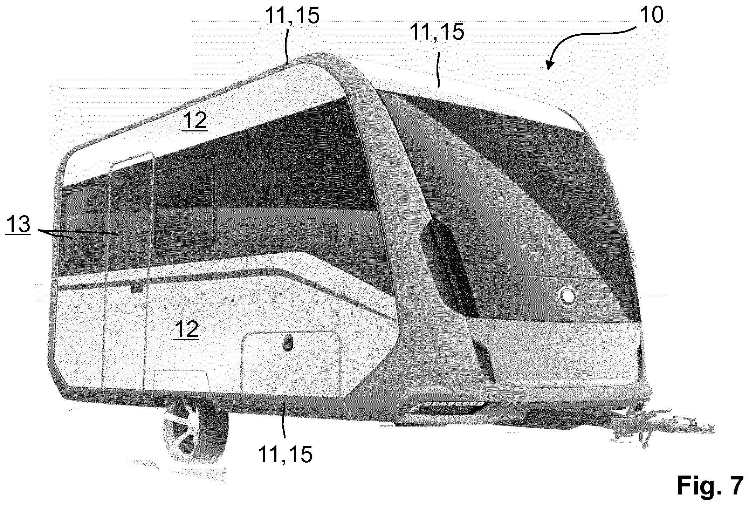

In Figur 7 ist ein erfindungsgemäßes Fahrzeug 10 mit dem erfindungsgemäßen Rahmen 11 in Form eines Wohnwagens gezeigt. Dabei sind auch alle notwendigen Türen 13 und Fenster 13 sowie Beschichtungen vorhanden. Wie gut zu erkennen ist, bildet der erfindungsgemäße Rahmen 11 mit seinen Strukturteilen 15 eine sichtbare Außenfläche des Fahrzeuges 10.

**B e z u g s z e i c h e n l i s t e**
- 10: Fahrzeug, insbesondere Wohnmobil, Wohnwagen, Auto
- 11: Rahmen
- 11.1: Freiraum
- 12: Füllelemente
- 12.1: Wandelement
- 12.2: Dachelement
- 12.3: Aussparung
- 12.4: Bodenelement
- 13: Fenster, Türen oder dergleichen
- 14: Verbindungsteil
- 15: Strukturteil
- 15.1: Hinterschnitt
- 16: Einsatzelement
- 17: Verstärkungselement
- 18: Verbindungselement
- 18.1: Haltemittel
- 18.2: Verankerungsmittel
- 18.3: Klebefläche
- 19: Schutzschicht
- 20: Schaumharz
- 21: Radkasten

- 50: Gussform
- 50.1: untere Hälfte
- 50.2: obere Hälfte
- 51: Stützkonstruktion
- 52: Gussteil, siehe auch Strukturteil 15

## Patentansprüche

1. Rahmen (11) für ein Fahrzeug (10) mit zumindest einem Strukturteil (15) , wobei das Strukturteil (15) als Gussteil (52) in einer Gussform (50) hergestellt ist und
die Gussform (50) die dreidimensionale Außenform des Strukturteils (15) wiedergibt, wobei das Strukturteil (15) durch ein selbstaufquellendes Schaumharz (20) gebildet ist, **dadurch gekennzeichnet,**
**dass** das Strukturteil (15) zumindest teilweise von außen mit einer Schutzschicht (19) beschichtet ist,
wobei die vorhandenen Strukturteile (15) einen tragenden Teil des Rahmens (11) bilden.

2. Rahmen (11) nach Anspruch 1,
**dadurch gekennzeichnet,**
**dass** das Strukturteil (15) zumindest teilweise von außen mit einer Schutzschicht (19), insbesondere einem GelCoat, beschichtet ist, wobei insbesondere die Schutzschicht (19) von innen mit dem Schaumharz (20) ausgegossen ist.

3. Rahmen (11) nach Anspruch 1 oder 2,
**dadurch gekennzeichnet,**
**dass** zumindest ein Einsatzelement (16) im Strukturteil (15) vorgesehen ist, welches zumindest teilweise eingegossen ist.

4. Rahmen (11) nach Anspruch 3,
**dadurch gekennzeichnet,**
**dass** das Einsatzelement (16) ein Verstärkungselement (17) ist und die mechanische Festigkeit, insbesondere die Zug- und/oder Druckfestigkeit, des Strukturteils (15) verbessert,
wobei das Verstärkungselement (17) zumindest aus Glasfasern, Carbonfasern, Verstärkungsmatte, Sandwichstruktur, Innenkern, metallischem Verstärkungselement oder eine Kombination davon gebildet ist und/oder
**dass** das Einsatzelement (16) ein Verbindungselement (18) ist, wodurch das Strukturteil (15) mit weiteren Teilen, insbesondere vom Rahmen (11) des Fahrzeuges (10), verbindbar ist.

5. Rahmen (11) nach einem der vorherigen Ansprüche,
**dadurch gekennzeichnet,**
**dass** ein Verbindungselement (18) mit wenigstens einem Haltemittel (18.1), insbesondere in Form eines Schraubmittels, Rastmittels, einer Klebe- und/oder Schweißfläche, versehen ist und/oder
**dass** ein Verbindungselement (18) mit wenigstens einem Verankerungsmittel (18.2), insbesondere in Form eines Pilzkopfes oder eines T-förmigen Abschnitts, versehen ist, wodurch eine formschlüssige Verbindung zum Schaumharz (20) vorhanden ist.

6. Rahmen (11) nach einem der vorherigen Ansprüche,
**dadurch gekennzeichnet,**
**dass** bei dem Strukturteil (15) auch Hinterschnitte (15.1) vorsehbar sind

7. Rahmen (11) nach einem der vorherigen Ansprüche,
**dadurch gekennzeichnet,**
**dass** der Schaumharz (20) eine Dichte zwischen 100 bis 300 kg/cbm, bevorzugt zwischen 130 bis 200 kg/cbm und besonders bevorzugt zwischen 140 bis 180 kg/cbm aufweist und/oder
**dass** der Schaumharz (20) eine Wärmeleitfähigkeit zwischen 0,1 und 0,015 W/(m*K), bevorzugt zwischen 0,08 und 0,02 W/(m*K), besonders bevorzugt zwischen 0,05 und 0,021 W/(m*K) aufweist und/oder
das Strukturteil (15) eine Zugfestigkeit zwischen 15 und 25.000 N/mm², bevorzugt zwischen 30 und 10.000 N/mm², besonders bevorzugt zwischen 45 und 2.000 N/mm² sowie zwischen 100 und 1.600 N/mm² aufweist.

8. Rahmen (11) nach einem der vorherigen Ansprüche,
**dadurch gekennzeichnet,**
**dass** zumindest zwei Strukturteile (15) direkt durch ihre Haltemittel (18.1) miteinander verbunden sind oder
**dass** zumindest zwei Strukturteile (15) indirekt über ein Verbindungsteil (14), insbesondere in Form eines Verlängerungs- oder Gelenkelementes, miteinander verbunden sind.

9. Rahmen (11) nach einem der vorherigen Ansprüche,
**dadurch gekennzeichnet,**
**dass** ein Freiraum (11.1) zwischen zumindest zwei Strukturteilen (15) durch ein Füllelement (12) ausfüllbar ist,
wobei insbesondere das Füllelement (12) als Wand- (12.1) und/oder Dachelement (12.2) ausgestaltet ist, und wobei insbesondere zumindest eine Aussparung (12.3) für ein Fenster oder eine Tür vorsehbar ist.

10. Verfahren zur Herstellung eines Rahmens (11) für ein Fahrzeug (10) nach einem der vorhergehenden Ansprüche mit zumindest einem Strukturteil (15), wobei das Strukturteil (15) als Gussteil (52) in einer Gussform (50) hergestellt ist und
die Gussform (50) die dreidimensionale Außenform des Strukturteils (15) wiedergibt, **und**
dass zumindest die folgenden Schritte zur Herstellung vorgesehen sind:
a) zumindest teilweises Auslegen der Gussform (50) mit einer Schutzschicht (19)
b) Einfüllen des gießbaren Schaumharzes (20) in die Gussform (50)
c) Aufschäumen lassen des Schaumharzes (20) in der Gussform (50)
d) Aushärten lassen des Schaumharzes (20) in der Gussform (50)
e) Öffnen und Herausnehmen des Strukturteils (15) aus der Gussform (50).

11. Verfahren zur Herstellung eines Rahmens (11) nach Anspruch 10,
**dadurch gekennzeichnet,**
**dass** in Schritt a) die Gussform (50) zumindest teilweise mit einem GelCoat als Schutzschicht (19) ausgelegt ist, in die das Schaumharz (20) einfüllbar ist.

12. Verfahren zur Herstellung eines Rahmens (11) nach einem vorhergehenden Verfahrensanspruch,
**dadurch gekennzeichnet,**
**dass** die Gussform (50) zumindest zweiteilig mit einer unteren Hälfte (50.1) und einer oberen Hälfte (50.2) aufgebaut ist und nach dem Schließen der Gussform (50) erst Schritt b) beginnt.

13. Verfahren zur Herstellung eines Rahmens (11) nach einem vorhergehenden Verfahrensanspruch,
**dadurch gekennzeichnet,**
**dass** vor Schritt b) in der Gussform (50) zumindest ein Einsatzelement (16), insbesondere an der Gussform (50), positioniert wird, welches mit dem Schaumharz (20) vergossen wird.

14. Verfahren zur Herstellung eines Rahmens (11) nach einem vorhergehenden Verfahrensanspruch,
**dadurch gekennzeichnet,**
**dass** vor Schritt b) ein Innenvolumen der Gussform (50) ermittelt wird, um damit die benötigte Menge des Schaumharzes (20) im Vorfeld zu bestimmen.

15. Verfahren zur Herstellung eines Rahmens (11) nach einem vorhergehenden Verfahrensanspruch,
**dadurch gekennzeichnet,**
**dass** zur Vermeidung eines Überdrucks durch das Schaumharz (20) Ausweichkavitäten (53) in der Gussform (50) vorhanden sind.

## Claims

1. Frame (11) for a vehicle (10) with at least one structural part (15), wherein
the structural part (15) is produced as a casting (52) in a mould (50), and
the mould (50) reproduces the three-dimensional outer shape of the structural part (15), **characterized in**
**that** the structural part (15) is formed by a self-swelling foam resin (20), the structural part (15) being at least partially coated from the outside with a protective layer (19),
wherein at least two existing structural parts (15) form a supporting part of the frame (11).

2. Frame (11) according to claim 1,
**characterized in**
**that** the structural part (15) is at least partially coated from the outside with a protective layer (19), in particular a GelCoat, the protective layer (19) in particular being cast from the inside with the foam resin (20).

3. Frame (11) according to claim 1 or 2,
**characterized in**
**that** at least one insert element (16) is provided in the structural part (15), which is at least partially cast in.

4. Frame (11) according to claim 3,
**characterized in**
**that** the insert element (16) is a reinforcing element (17) and improves the mechanical strength, in particular the tensile and/or compressive strength, of the structural part (15), wherein the reinforcing element (17) is formed of at least glass fibers, carbon fibers, reinforcing mat, sandwich structure, inner core, metallic reinforcing element, or a combination thereof, and/or
**that** the insert element (16) is a connecting element (18), by means of which the structural part (15) can be connected to further parts, in particular of the frame (11) of the vehicle (10).

5. Frame (11) according to any one of the preceding claims,
**characterized in**
**that** a connecting element (18) is provided with at least one retaining means (18.1), in particular in the form of a screwing means, latching means, an adhesive and/or welding surface, and/or
**that** a connecting element (18) is provided with at least one anchoring means (18.2), in particular in the form of a mushroom head or a T-shaped section, whereby a form-fitting connection to the foam resin (20) is present.

6. Frame (11) according to any one of the preceding claims,
**characterized in**
**that** undercuts (15.1) can also be provided in the structural part (15).

7. Frame (11) according to any one of the preceding claims,
**characterized in**
**that** the foam resin (20) has a density of between 100 and 300 kg/cbm, preferably between 130 and 200 kg/cbm and particularly preferably between 140 and 180 kg/cbm, and/or that the foam resin (20) has a thermal conductivity of between 0.1 and 0.015 W/(m*K), preferably between 0.08 and 0.02 W/(m*K), particularly preferably between 0.05 and 0.021 W/(m*K) and/or
**that** the structural part (15) has a tensile strength of between 15 and 25,000 N/mm², preferably between 30 and 10,000 N/mm², particularly preferably between 45 and 2,000 N/mm² and between 100 and 1,600 N/mm².

8. Frame (11) according to any one of the preceding claims,
**characterized in**
**that** at least two structural parts (15) are directly connected to one another by their retaining means (18.1), or
in that at least two structural parts (15) are indirectly connected to one another via a connecting element (14), in particular in the form of an extension or joint element.

9. Frame (11) according to any one of the preceding claims,
**characterized in**
**that** a free space (11.1) between at least two structural parts (15) can be filled by a filling element (12),
wherein in particular the filling element (12) is designed as a wall element (12.1) and/or roof element (12.2), and wherein in particular at least one recess (12.3) for a window or a door can be provided.

10. A method of manufacturing a frame (11) for a vehicle (10) according to any one of the preceding claims, comprising at least one structural part (15), wherein the structural part (15) is manufactured as a casting (52) in a mould (50), and
the mould (50) reproduces the three-dimensional outer shape of the structural part (15), and
at least the following steps are provided for the manufacture:
a) at least partial lining of the mould (50) with a protective layer (19)
b) filling the castable foam resin (20) into the mould (50)
c) allowing the foam resin (20) to foam in the mould (50)
d) allowing the foam resin (20) to cure in the mould (50)
e) opening and removing the structural part (15) from the mould (50).

11. Method of manufacturing a frame (11) according to claim 10,
**characterized in**
**that**, in step a), the mould (50) is at least partially lined with a GelCoat as protective layer (19), into which the foam resin (20) can be filled.

12. Method of manufacturing a frame (11) according to a preceding method claim, **characterized in**
**that** the mould (50) is constructed at least in two parts with a lower half (50.1) and an upper half (50.2) and, after the mould (50) has been closed, step b) first begins.

13. Method of manufacturing a frame (11) according to a preceding method claim,
**characterized in**
**that**, before step b), at least one insert element (16) is positioned in the casting mould (50), in particular on the casting mould (50), which insert element is cast with the foam resin (20).

14. Method of manufacturing a frame (11) according to a preceding method claim,
**characterized in**
**that** an internal volume of the mould (50) is determined before step b) in order to determine the required amount of the foam resin (20) in advance.

15. Method of manufacturing a frame (11) according to a preceding method claim,
**characterized in**
**that** escape cavities (53) are provided in the mould (50) in order to avoid overpressure by the foam resin (20).

## Revendications

1. Châssis (11) pour un véhicule (10) avec au moins une partie structurelle (15), dans lequel la partie structurelle (15) est produite en tant qu'une pièce moulée (52) dans un moule (50), et
le moule (50) reproduit la forme extérieure tridimensionnelle de la partie structurelle (15), **caractérise en ce**
**que** la partie structurelle (15) est formée par une résine de mousse auto-gonflante (20), la partie structurelle (15) étant au moins partiellement revêtue de l'extérieur d'une couche protectrice (19),
dans lequel au moins deux parties structurelles existantes (15) forment une partie de support du châssis (11).

2. Châssis (11) selon la revendication 1,
**caractérise en ce**
**que** la partie structurelle (15) est au moins partiellement revêtue de l'extérieur d'une couche protectrice (19), en particulier d'un GelCoat, la couche protectrice (19) étant en particulier coulée de l'intérieur avec la résine de mousse (20).

3. Châssis (11) selon la revendication 1 ou 2,
**caractérise en ce**
**qu'**au moins un élément d'insertion (16) est prévu dans la partie structurelle (15), qui est au moins partiellement coulée.

4. Châssis (11) selon la revendication 3,
**caractérise en ce**
**que** l'élément d'insertion (16) est un élément de renforcement (17) et améliore la résistance mécanique, en particulier la résistance à la traction et/ou à la compression, de la partie structurelle (15),
dans lequel l'élément de renforcement (17) est formé au moins de fibres de verre, de fibres de carbone, d'un tapis de renforcement, d'une structure sandwich, d'un noyau interne, d'un élément de renforcement métallique ou d'une combinaison de ceux-ci et/ou que l'élément d'insertion (16) est un élément de liaison (18), grâce auquel la partie structurelle (15) peut être reliée à d'autres parties, en particulier au châssis (11) du véhicule (10).

5. Châssis (11) selon l'une des revendications précédentes,
**caractérise en ce**
**qu'**un élément de liaison (18) est muni d'au moins un moyen de retenue (18.1), notamment sous la forme d'un moyen de vissage, d'un moyen d'encliquetage, d'une surface adhésive et/ou de soudage, et/ou
**qu'**un élément de liaison (18) est pourvu d'au moins un moyen d'ancrage (18.2), en particulier sous la forme d'une tête de champignon ou d'une section en forme de T, de sorte qu'il existe une liaison par complémentarité de forme avec la résine de mousse (20).

6. Châssis (11) selon l'une des revendications précédentes,
**caractérise en ce**
**que** des contre-dépouilles (15.1) peuvent également être prévues pour la partie structurelle (15).

7. Châssis (11) selon l'une des revendications précédentes,
**caractérise en ce**
**que** la résine de mousse (20) a une densité comprise entre 100 et 300 kg/cbm, de préférence entre 130 et 200 kg/cbm et de manière particulièrement préférée entre 140 et 180 kg/cbm, et/ou
**que** la résine de mousse (20) a une conductivité thermique comprise entre 0,1 et 0,015 W/(m*K), de préférence entre 0,08 et 0,02 W/(m*K), de manière particulièrement préférée entre 0,05 et 0,021 W/(m*K) et/ou
**que** la partie structurelle (15) a une résistance à la traction comprise entre 15 et 25 000 N/mm², de préférence entre 30 et 10 000 N/mm², de manière particulièrement préférée entre 45 et 2 000 N/mm² et entre 100 et 1 600 N/mm².

8. Châssis (11) selon l'une des revendications précédentes,
**caractérise en ce**
**qu'**au moins deux parties structurelles (15) sont directement reliées l'une à l'autre par leurs moyens de retenue (18.1) ou
**qu'**au moins deux parties structurelles (15) sont reliées indirectement l'une à l'autre par l'intermédiaire d'un élément de liaison (14), en particulier sous la forme d'un élément d'extension ou d'articulation.

9. Châssis (11) selon l'une des revendications précédentes,
**caractérise en ce**
**qu'**un espace libre (11.1) entre au moins deux parties structurelles (15) peut être rempli par un élément de remplissage (12),
dans lequel en particulier l'élément de remplissage (12) est conçu comme un élément de mur (12.1) et/ou un élément de toit (12.2), et dans lequel en particulier au moins un évidement (12.3) pour une fenêtre ou une porte peut être prévu.

10. Procédé de fabrication d'un châssis (11) pour un véhicule (10) selon l'une quelconque des revendications précédentes, comportant au moins partie structurelle (15), la partie structurelle (15) étant réalisée sous forme de pièce moulée (52) dans un moule (50), et le moule (50) reproduit la forme extérieure tridimensionnelle de la partie structurelle (15),
et
au moins les étapes suivantes sont prévues pour la fabrication :
a) revêtement au moins partiel du moule (50) avec une couche protectrice (19)
b) remplissage du moule (50) avec la résine de mousse coulable (20)
c) permettre à la résine de mousse (20) de mousser dans le moule (50)
d) laisser la résine de mousse (20) durcir dans le moule (50)
e) ouvrir et retirer la partie structurelle (15) du moule (50).

11. Procédé de fabrication d'un châssis (11) selon la revendication 10,
**caractérise en ce**
**que**, à l'étape a), le moule (50) est au moins partiellement revêtu avec un gel coat en tant que couche protectrice (19), dans lequel la résine mousse (20) peut être remplie.

12. Procédé de fabrication d'un châssis (11) selon une revendication de procédé précédente,
**caractérise en ce**
**que** le moule (50) est construit en au moins deux parties avec une moitié inférieure (50.1) et une moitié supérieure (50.2) et l'étape b) ne commence qu'après la fermeture du moule (50).

13. Procédé de fabrication d'un châssis (11) selon une revendication de procédé précédente,
**caractérise en ce**
**que**, avant l'étape b), au moins un élément d'insertion (16) est positionné dans le moule (50), en particulier sur le moule (50), lequel élément d'insertion est coulé avec la résine de mousse (20).

14. Procédé de fabrication d'un châssis (11) selon une revendication de procédé précédente,
**caractérise en ce**
**qu'**un volume interne du moule (50) est déterminé avant l'étape b) afin de déterminer à l'avance la quantité requise de la résine de mousse (20).

15. Procédé de fabrication d'un châssis (11) selon une revendication de procédé précédente,
**caractérise en ce**
**que** des cavités d'échappement (53) sont présentes dans le moule (50) afin d'éviter une surpression par la résine de mousse (20).
